# EUROPÄISCHE PATENTSCHRIFT

(11) **EP 3 832 130 B1**
(45) Veröffentlichungstag und Bekanntmachung des Hinweises auf die Patenterteilung: **29.05.2024**
(21) Anmeldenummer: 20203354.4
(22) Anmeldetag: 22.10.2020
(51) Int. Cl.: F03D 7/04

(54) **VERFAHREN ZUR STEUERUNG EINER WINDENERGIEANLAGE UND/ODER EINES WINDPARKS**
METHOD FOR CONTROLLING A WIND TURBINE AND/OR A WIND FARM
PROCÉDÉ DE COMMANDE D'UNE ÉOLIENNE ET/OU D'UN PARC ÉOLIEN

(30) Priorität: 05.12.2019 DE 102019133208
(43) Veröffentlichungstag der Anmeldung: 09.06.2021
(73) Patentinhaber: Wobben Properties GmbH, 26607 Aurich (DE)
(72) Erfinder: BROMBACH, Johannes, 13437 Berlin (DE)
(74) Vertreter: Eisenführ Speiser

(56) Entgegenhaltungen:
- EP-A1- 2 654 165
- WO-A1-2018/121667
- WO-A1-2020/078872
- DE-A1-102017 112 944
- US-A1- 2019 211 803

## Beschreibung

Die vorliegende Erfindung betrifft eine Steuerung einer Windenergieanlage und/oder eines Windparks sowie eine Verfahren zum Steuern einer solchen Windenergieanlage und/oder eines solchen Windparks. Ferner betrifft die vorliegende Erfindung einen solche Windenergieanlage und einen solchen Windpark.

Windparks und die in einem Windpark integrierten Windenergieanlagen weisen häufig technische Eigenschaften auf, die softwareseitig bspw. durch die Betriebssoftware der Windenergieanlage blockiert sind.

Ein Beispiel hierfür ist der sogenannte Schallreduktionsbetrieb (kurz: Schallreduktion), in dem die Windenergieanlage in einer Drehzahl betrieben wird, die schall- und nicht leistungsoptimiert eingestellt ist. Dies bedeutet insbesondere, dass die Windenergieanlage in einer Drehzahl betrieben wird, in der die Windenergieanlage einen geringen Geräuschpegel aufweist, also ab einem bestimmten Drehzahlbereich abgeriegelt ist.

Im Falle von kritischen Netzsituationen, also in Situationen in denen die Stabilität des elektrischen Versorgungsnetzes gefährdet ist, können derartig betriebene Windenergieanlagen aber nicht oder nur unzureichend an der Stabilisierung des elektrischen Versorgungsnetzes mitwirken, bzw. wenn um 22:00 Uhr abends der Nachtbetriebsmodus der Windenergieanlage angeht.

Dies führt dazu, dass in Netzabschnitten des elektrischen Versorgungsnetzes in denen anteilig besonders viele Windenergieanlagen angeordnet sind, der Netzbetreiber nur eingeschränkt auf die kritische Netzsituation reagieren kann.

Das Deutsche Patent- und Markenamt hat in der Prioritätsanmeldung zur vorliegenden Anmeldung folgenden Stand der Technik recherchiert: DE 10 2018 125 445 A1.

EP 2 654 165 A1 betrifft ein Verfahren zum Betreiben eines Windparks.

Aufgabe der vorliegenden Erfindung ist es daher, zumindest eines der oben genannten Probleme zu adressieren, insbesondere soll eine Steuerung bzw. ein Verfahren vorgeschlagen werden, welches es dem Netzbetreiber ermöglicht jederzeit und im vollen Umfang auf eine Windenergieanlage zuzugreifen, insbesondere um das elektrische Versorgungsnetz zu stützen bzw. zu stabilisieren. Insbesondere soll dem Netzbetreiber eine maximale Stellfähigkeit von Windenergieanlagen in kritischen Netzsituationen bereitgestellt werden.

Erfindungsgemäß wird somit eine Steuerung einer Windenergieanlage und/oder eines Windparks vorgeschlagen, wobei die Steuerung eine Vielzahl von Betriebsmodi umfasst und eine Schnittstelle aufweist, insbesondere zur Bereitstellung einer maximalen Stellfähigkeit der Windenergieanlage und/oder des Windparks in kritischen Netzsituationen, wobei die Schnittstelle dazu eingerichtet ist, ein Signal eines Netzbetreibers zu empfangen, wodurch sämtliche der Vielzahl von Betriebsmodi für den Netzbetreiber zur dessen Verfügung freigegeben werden.

Die Steuerung kann bspw. die Steuereinheit einer Windenergieanlage und/oder eines Windparks sein oder in der Steuereinheit der Windenergieanlage und/oder des Windparks implementiert sein.

Bevorzugt ist die Steuerung die Windparksteuereinheit eines Windparks.

Zudem weist die Steuerung eine Vielzahl von Betriebsmodi auf, die bspw. automatisch über eine Software oder mittels einer Schnittstelle durch den Anlagenhersteller ausgewählt werden können.

Ein Betriebsmodus ist bspw. der Schallreduktionsbetriebsmodus, in dem die Windenergieanlage bzw. der Windpark schalloptimiert betrieben wird, also insbesondere so, dass die Schallemissionen der Windenergieanlage bzw. des Windparks unterhalb gesetzlicher Grenzwerte liegen.

Weitere Betriebsmodi sind bspw. der Nachtbetriebsmodus oder der Wirkleistungsbetriebsmodus.

Bevorzugt sind die Betriebsmodi in einer Software implementiert und/oder in einer Datenbank gespeichert.

Zudem weist die Steuerung eine Schnittstelle auf, die dazu eingerichtet ist, ein Signal eines Netzbetreibers zu empfangen. Dies kann bspw. per Funk- oder Kabelübertragung erfolgen, bspw. per Internet oder per Signalkabel.

Die Schnittstelle selbst ist dabei ferner dazu eingerichtet, die maximale Stellfähig der Windenergieanlage und/oder des Windparks für den Netzbetreiber freizugeben. Die Schnittstelle ist also dazu vorgesehen, dass der Netzbetreiber eine volle Funktionsfreigabe der Betriebsmodi der Windenergieanlage bzw. des Windparks erhält, insbesondere in kritischen Netzsituationen, also wenigstens immer dann, wenn das elektrische Versorgungsnetz an das die Windenergieanlage bzw. der Windpark angeschlossen ist, droht zu destabilisieren.

Unter kritischen Netzsituationen sind also all jene Situationen zu verstehen, in denen das elektrische Versorgungsnetz zu destabilisieren droht und/oder bereits destabilisiert ist, bspw. bei einem *black out* oder einem *system split.* Grdsl. liegen kritische Netzsituationen auch immer dann vor, wenn die Netzfrequenz stark von der Netznennfrequenz abweicht, also wenn bspw. die Netzfrequenz 50,8 Hz ist und die Netznennfrequenz 50 Hz beträgt.

Damit die Steuerung die vorstehend oder nachstehend beschriebenen Funktionen ausführen kann und damit die Schnittstelle dazu eingerichtet ist, die vorstehend oder nachstehend beschriebenen Funktionen auszuführen, weist die Steuerung insbesondere eine Steuersoftware auf, die dem Netzbetreiber ermöglicht über die Schnittstelle in die Steuerung einzugreifen, um hierdurch insbesondere die volle Funktionsfreigabe der Windenergieanlage bzw. des Windparks zu erreichen.

Es wird also insbesondere vorgeschlagen, dass der Netzbetreiber über eine Steuerung, insbesondere über eine Schnittstelle, aktiv in den Betrieb einer Windenergieanlage bzw. eines Windparks eingreift und sich somit Zugang zu sämtlichen Betriebsmodi der Windenergieanlage verschafft.

Bspw. wird der Windpark durch die Windparksoftware in einem Schallreduktionsbetriebsmodus betrieben. Im Falle einer kritischen Netzsituation kann sich nun der Netzbetreiber auf den Windpark aufschalten und bspw. einen anderen Betriebsmodus auswählen. Der Netzbetreiber wird also mittels der Steuerung in die Lage versetzt, den Windpark so zu steuern, dass dieser das Netz stützt, wenn es nötig ist.

Bevorzugt weist die Windenergieanlage bzw. weisen die Windenergieanlagen des Windparks einen Stellbereich auf, welcher zum einen durch einen physikalischen Stellbereich begrenzt ist, also dem maximalen Stellbereich für die Wirk- und die Blindleistung der Windenergieanlage, und welcher im Betrieb der Windenergieanlage durch die Windenergieanlagensteuerung, und insbesondere durch die Betriebsmodi, begrenzt ist.

Die vorliegende Erfindung sieht also insbesondere vor, dass der Netzbetreiber derart auf die Windenergieanlage zu greifen kann, dass diese für den Netzbetreiber nur noch durch die physikalischen Grenzen limitiert ist.

Vorzugsweise ist die oder eine weitere Schnittstelle der Steuerung dazu eingerichtet, ein Signal eines Dritten zu empfangen und außerdem oder alternativ, dass der Netzbetreiber innerhalb der Steuerung die höchste Priorität zugewiesen bekommt, wenn ein Signal vom Netzbetreiber über die Schnittstelle empfangen wurde.

Die Steuerung kann somit auch noch weitere Schnittstellen aufweisen, die bspw. weiteren Funktionen haben, wie bspw. eine Schnittstelle für den Anlagenhersteller und/oder eine Schnittstelle für den Anlagenbetreiber.

Besonders vorteilhaft hierbei ist, dass verschiedene Gruppen mit unterschiedlichen Berechtigungen gleichzeitig auf den Windpark bzw. die Windenergieanlage zugreifen können.

Ferner ist die Steuerung aber auch so ausgeführt, dass der Netzbetreiber die höchste Priorität innerhalb der Steuerung hat, insbesondere wenn ein Signal vom Netzbetreiber über die Schnittstelle empfangen wurde.

Die Steuerung ist also so ausgeführt, dass der Netzbetreiber bevorzugt innerhalb der Steuerung immer die höchste Priorität hat, also, wenn bspw. der Anlagenbetreiber einen Blindleistungsbetriebsmodus einstellen möchte und der Netzbetreiber den Netzwiederaufbau-modus benötigt, so führt der Windpark bzw. die Windenergieanlage den Netzwiederaufbaumodus aus.

Vorzugsweise umfasst die Steuerung eine weitere Schnittstelle, bspw. für einen Windenergieanlagenbetreiber, die deaktiviert wird, wenn ein Signal vom Netzbetreiber über die Schnittstelle empfangen wurde.

Sofern also die Steuerung weitere Schnittstellen aufweist, wird vorgeschlagen, dass diese deaktiviert werden, sofern der Netzbetreiber auf den Windpark bzw. die Windenergieanlage zugreifen möchte.

Bevorzugt wird hierfür ein Bit, insbesondere ein Störfall-Bit, verwendet, welches der Netzbetreiber an die Steuerung über die Schnittstelle sendet.

Sobald die Steuerung das Störfallbit erhalten hat, werden die weiteren Schnittstellen deaktiviert, also bspw. die Schnittstelle für den Windpark- und/oder Windenergieanlagebetreiber.

Vorzugsweise ist die oder eine weitere Schnittstelle der Steuerung dazu eingerichtet, wenigstens an einer der nachfolgenden Steuer- und/oder Regelmethoden teilzunehmen: Blindleistungsregelung, Spannungsregelung, Wirkleistungsregelung; Direktstromvermarktung; Minutenreserve; Sekundärreserve; Temperaturreglung; Cos-Phi-Regelung; Q(U)-Regelung; Schattenwurfsteuerung; Fledermaussteuerung.

Die Schnittstelle ist also dazu eingerichtet wenigstens ein Signal eines Dritten zu empfangen, welches dazu führt, dass der Windpark bzw. die Windenergieanlage einen dieser Betriebsmodi ausführt.

Vorzugsweise weist die Steuerung eine Datenbank auf, mittels derer ein Zugriff des Netzbetreibers auf die Windenenergieanlage und/oder den Windpark protokolliert wird.

Es wird also auch vorgeschlagen, dass sofern der Netzbetreiber über die Schnittstelle der Steuerung auf den Windpark bzw. die Windenergieanlage zugreift, dies seitens der Steuerung mittels einer Datenbank protokolliert wird, bspw. die Zugriffszeiten, die Zugriffsdauer und die durch den Netzbetreiber angeforderten und ausgelösten Betriebsmodi.

Sofern der vom Netzbetreiber angeforderte und ausgelöste Betriebsmodi dokumentiert wird, wird ebenfalls vorgeschlagen auch den von der Betriebssoftware eigentlich gewünscht Betriebsmodus zu dokumentieren.

Vorzugsweise weist die Steuerung wenigstens einen sicheren Betriebsmodus auf, der deaktiviert ist und der mittels der Schnittstelle, insbesondere nur, bevorzugt durch den Netzbetreiber, aktivierbar ist.

Die Steuerung umfasst somit wenigstens auch einen Betriebsmodus, der standardmäßig deaktiviert ist und, bevorzugt nur, durch den Netzbetreiber aktivierbar.

Vorzugsweise umfasst der sichere Betriebsmodus wenigstens eine Funktion der nachfolgenden Liste umfasst: Inertia-Emulation; Primärregelleistung; Q(U)-Regelung mit maximalen Stellbereich; Störfallregelung.

Es wird also insbesondere vorgeschlagen, dass diese Funktionen nur den Netzbetreiber aktiviert werden können.

Bei der Inertia-Emulation erzeugt der Windpark bzw. die Windenergieanlage zusätzliche elektrische Leistung aus der Trägheit des Rotor-Generator-Systems der Windenergieanlage(n).

Bei der Primärregeleistung ist der Windpark bzw. die Windenergieanlage darauf ausgerichtet, schnelle Leistungsänderungen herbeizuführen, insbesondere umso Primärregeleistung zu erzeugen, die der Netzbetreiber für die Primärreglung des elektrischen Versorgungsnetzes verwenden kann.

Bei der Q(U)-Regelung mit maximalen Stellbereich regelt der Windpark bzw. die Windenergieanlage die Spannung entsprechend der Statik im Normalmodus oder auch einer angepassten Statik im Störfallmodus, wobei zum Einstellen, bzw. zum Ausregeln der Spannung Stellbereichsbeschränkungen ignoriert werden. Besonders von Vorteil ist dies bei Windparks, welche eine Stellbereichsbeschränkung entsprechend eines minimalen cos(Phi) ("V") aufweisen. Im unteren Teillastbereich ist hier auch der mögliche Blindleistungsstellbereich sehr klein. Diese Beschränkung kann mittels der vorstehend oder nachstehend beschriebenen Steuerung bzw. dem vorstehend oder nachstehend beschriebenen Verfahren aufgehoben werden.

Es wird also insbesondere auch vorgeschlagen, dass der Netzbetreiber die Grenzen des Stellbereiches aufheben kann, insbesondere um das elektrische Versorgungsnetz zu stabilisieren.

Auch bei Anlagen ohne STATCOM-Option, aber mit verbauter STATCOM-Hardware kann die Stellbereichsbeschränkung im sehr niedrigen Teillastbereich und bei abgeschalteter Anlage deaktiviert werden, auch wenn der Kunde bspw. die STATCOM-Option nicht erworben hat.

Das gleiche gilt auch für die Ausregelung von Q-Sollwerten. Auch hier wird der Q-Sollwert bis an die Stellbereichsgrenzen heran versucht auszuregeln.

Bei der Störfallregelung wird ein Störfallparameter- und/oder Reglersatz in der Windpark- und/oder Windenergieanlagenregelung aktiviert, welcher sich vom Normalmodus unterscheidet. Dieser ist auf die Störfallstrategien angepasst und kann bspw. folgende Anpassungen beinhalten:
- Angepasste Leistungs-Frequenz-Statik;
- Angepasste Spannungs-Blindleistungs-Statik;
- Deaktivierung eines Totbandes bei der Spannungs- und Frequenzregelung;
- Angepasste FRT-Strategie mit z.B. einen anderen K-Faktor.

Vorzugsweise weist die Steuerung wenigstens einen weiteren Betriebsmodus auf, der aktiviert ist und der mittels der Schnittstelle, insbesondere nur, bevorzugt durch den Netzbetreiber, deaktivierbar ist.

Die Steuerung umfasst somit bevorzugt weitere Betriebsmodi, die, insbesondere nur, der Netzbetreiber im laufenden Betrieb des Windparks bzw. der Windenergieanlage deaktivieren kann.

Vorzugsweise umfasst der weitere Betriebsmodus wenigstens eine Funktion der nachfolgenden Liste: Schallreduktionsbetriebsmodus; Nachtbetriebsmodus.

Der Netzbetreiber wird somit auch in die Lage versetzt bestimmte Betriebsmodi zu deaktivieren, die bspw. durch gesetzliche Richtlinien vorgeschrieben sind, insbesondere um die Stabilität des elektrischen Versorgungsnetzes gewährleisten zu können und/oder zur Gefahrenabwehr.

Auch kann die Steuerung noch weitere Betriebsmodi und/oder Funktionen umfassen.

Vorzugsweise umfasst die Vielzahl von Betriebsmodi wenigstens einen Modus der nachfolgenden Liste umfasst: einen Netzwiederaufbau-Modus; der insbesondere aktivierbar ist und bevorzugt aktiviert wird, wenn ein Signal des Netzbetreibers über die Schnittstelle empfangen wurde; einen STATCOM-Modus, der insbesondere aktivierbar ist und bevorzugt aktiviert wird, wenn ein Signal des Netzbetreibers über die Schnittstelle empfangen wurde; einen Schallreduktions-Modus, der insbesondere deaktivierbar ist und bevorzugt deaktiviert wird, wenn ein Signal des Netzbetreibers über die Schnittstelle empfangen wurde; einen Fledermauserkennungs-Modus, der insbesondere deaktivierbar ist und bevorzugt deaktiviert wird, wenn ein Signal des Netzbetreibers über die Schnittstelle empfangen wurde.

Die Steuerung ist somit auch dazu eingerichtet, an einem Netzwiederaufbau teilzunehmen und/oder das elektrische Versorgungsnetz durch einen STATCOM-Modus zu stützen.

Zudem kann die Steuerung auch für Schallreduktion oder Fledermäuse verwendet werden, wobei in diesen Fällen üblicherweise der Windpark bzw. die Windenergieanlage gedrosselt gefahren werden.

Erfindungsgemäß wird ferner ein Verfahren zum Steuern einer Windenergieanlage und/oder eines Windparks, umfassend die Schritte: Empfangen eines Signals durch eine Steuerung der Windenergieanlage und/oder des Windparks, Feststellen ob das Signal, ein Signal eines Netzbetreibers ist, welches sämtliche einer Vielzahl von Betriebsmodi der Windenergieanlage und/oder des Windparks für den Netzbetreiber zur dessen Verfügung freigibt, Freigeben der Vielzahl von Betriebsmodi der Windenergieanlage und/oder des Windparks, wenn das Signal ein Signal eines Netzbetreibers ist, welches sämtliche der Vielzahl von Betriebsmodi der Windenergieanlage und/oder des Windparks für den Netzbetreiber zur dessen Verfügung freigibt.

Vorzugsweise umfasst das Verfahren ferner den Schritt: Protokollieren der Freigabe der Betriebsmodi für den Netzbetreiber.

Vorzugsweise erfolgt das Feststellen, ob das Signal ein Signal eines Netzbetreibers ist, welches sämtliche einer Vielzahl von Betriebsmodi der Windenergieanlage und/oder des Windparks für den Netzbetreiber zur dessen Verfügung freigibt, durch ein Vergleichen mit in einer Datenbank hinterlegten Signalen.

Vorzugsweise umfasst das Verfahren ferner den Schritt: Steuern der Windenergieanlage und/oder des Windparks durch den Netzbetreiber.

Es wird also insbesondere vorgeschlagen, dass sich der Netzbetreiber in kritischen Netzsituationen auf den Windpark bzw. die Windenergieanlage aufschaltet, um dort die Betriebsmodi derart zu verändern, dass der Windpark bzw. die Windenergieanlage mithilft das elektrische Versorgungsnetz zu stabilisieren.

Vorzugsweise wird das vorstehend oder nachstehend beschriebene Verfahren mittels einer vorstehend oder nachstehend beschriebenen Steuerung ausgeführt.

Erfindungsgemäß wird ferner eine Windenergieanlage vorgeschlagen, umfassend eine vorstehend oder nachstehend beschriebene Steuerung und/oder eine Steuerung, die dazu eingerichtet ist, ein vorstehend oder nachstehend beschriebenes Verfahren auszuführen und/oder an einem solchen Verfahren teilzunehmen.

Erfindungsgemäß wird ferner ein Windpark vorgeschlagen, umfassend eine vorstehend oder nachstehend beschriebene Windenergieanlage und außerdem oder alternativ eine vorstehend oder nachstehend beschriebene Steuerung und/oder eine Steuerung, die dazu eingerichtet ist, ein vorstehend oder nachstehend beschriebenes Verfahren auszuführen und/oder an einem solchen Verfahren teilzunehmen.

Die vorliegende Erfindung wird nun nachfolgend exemplarisch und anhand von Ausführungsbeispielen unter Bezugnahme auf die begleitenden Figuren näher erläutert, wobei für gleiche oder ähnliche Baugruppen dieselben Bezugszeichen verwendet werden.
- Fig. 1: zeigt eine schematische Ansicht einer Windenergieanlage gemäß einer Ausführungsform.
- Fig. 2: zeigt einen schematischen Aufbau eines Windparks mit einer Steuerung gemäß einer Ausführungsform.
- Fig. 3: zeigt einen schematischen Ablauf eines Verfahrens gemäß einer Ausführungsform.

Die Windenergieanlage 100 weist hierzu einen Turm 102 und eine Gondel 104 auf. An der Gondel 104 ist ein aerodynamischer Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Ferner weist die Windenergieanlage eine vorstehend oder nachstehend beschriebene Steuerung auf, die mit einer Windparksteuereinheit und/oder einem Netzbetreiber verbunden ist.

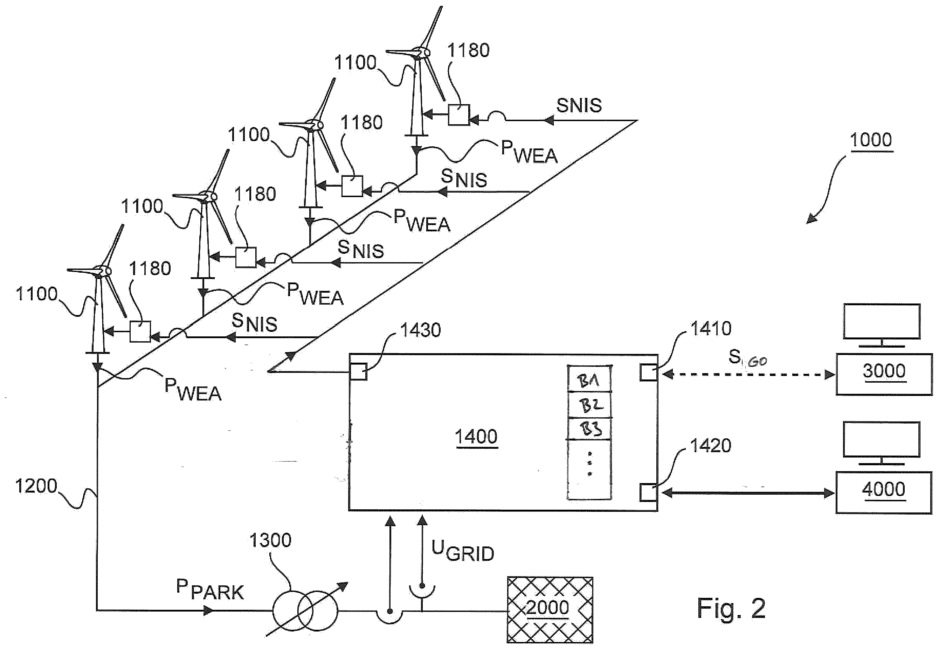

Fig. 2 zeigt einen schematischen Aufbau eines Windparks 1000 mit einer Steuerung 1400 gemäß einer Ausführungsform.

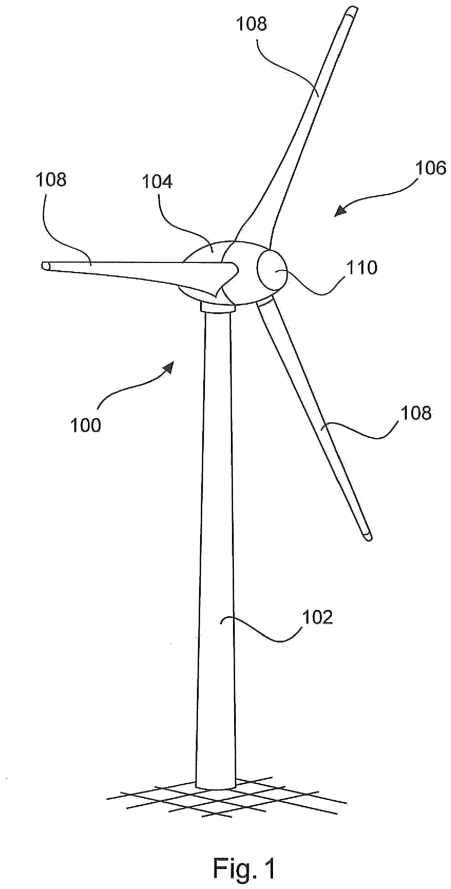

Der Windpark 1000 umfasst eine Vielzahl von Windenergieanlagen 1100, wie bspw. in Fig. 1 gezeigt, die über ein gemeinsames Windparknetz 1200 miteinander verbunden sind.

Das Windparknetz 1200 ist mittels eines Windparktransformator 1300 an ein elektrisches Versorgungsnetz 2000 angeschlossen, um bspw. eine elektrische Windparkleistung Pₚₐᵣₖ einzuspeisen, welche sich aus einer Summe der einzelnen elektrischen Windenergieanlagenleistungen P_{wea} zusammensetzt.

Ferner weistder Windpark 1000 eine erfindungsgemäße Steuerung 1400 auf, die als Windparksteuereinheit ausgebildet ist, insbesondere um den Windpark 1000 zu steuern.

Die Steuerung 1400 umfasst eine Vielzahl von Betriebsmodi B1, B2, B3 sowie eine Schnittstelle 1410 und eine weitere Schnittstelle 1420.

Die Schnittstelle 1410 ist dazu eingerichtet, ein Signal eines Netzbetreibers 3000 zu empfangen, wodurch sämtlich der Vielzahl von Betriebsmodi B1, B2, B3 für den Netzbetreiber 3000 freigegeben werden. Diese Schnittstelle 1410 kann auch als Netzbetreiberschnittstelle bezeichnet werden.

Hierdurch kann der Netzbetreiber 3000 auf die Betriebsmodi B1, B2, B3 des Windparks 1000 zugreifen, und diese insbesondere so wählen, dass der Windpark 1000 an einer Stabilisierung des elektrischen Versorgungsnetzes 2000 mitwirkt.

Die weitere Schnittstelle 1420 ist bspw. eine Schnittstelle für den Anlagenbetreiber 4000, der über diese Schnittstelle 1420 ebenfalls auf den Windpark zu greifen kann. Diese Schnittstelle 1420 kann auch als Windparkbetreiberschnittstelle 1420 bezeichnet werden.

Um steuerungstechnische Problem zu verhindern, weist die Schnittstelle 1410 des Netzbetreibers innerhalb der Steuerung 1400 eine höhere Priorität auf, d.h. die Steuerung 1400 priorisiert die Anfragen und Vorgaben des Netzbetreibers gegenüber weiteren Anfragen oder Vorgaben Dritter, wie bspw. dem Anlagenbetreiber 4000 oder der internen Steuersoftware. Dies wird bevorzugt in Steuersoftware implementiert.

Die Ansteuerung der einzelnen Windenergieanlagen 1100 erfolgt schließlich über eine Steuerschnittstelle 1430, die mit den einzelnen Windenergieanlagensteuereinheiten 1180 verbunden ist, bspw. mittels verschiedener Steuersignale S_{NIS}.

Bevorzugt ist Steuerung 1400 ferner dazu eingerichtet, die Einspeisung des Windparks 1000 in das elektrische Versorgungsnetz 2000 zu überwachen, insbesondere die Spannung U_{grid} an einem Netzanschlusspunkt des Windparks.

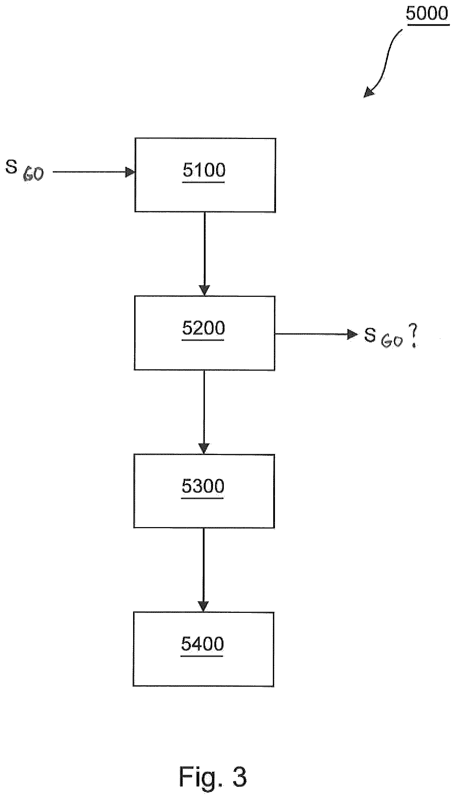

Fig. 3 zeigt einen schematischen Ablauf eines Verfahrens gemäß einer Ausführungsform 5000.

In einem ersten Schritt 5100 wird ein Signal durch die Steuerung der Windenergieanlage und/oder des Windparks empfangen.

Anschließend wird in einem nächsten Schritt 5200 festgestellt ob das Signal, ein Signal eines Netzbetreibers ist, welches sämtliche einer Vielzahl von Betriebsmodi der Windenergieanlage und/oder des Windparks für den Netzbetreiber zur dessen Verfügung freigibt.

Sofern das Signal ein solches Signal ist, wird in einem nächsten Schritt 5300 die Vielzahl der Betriebsmodi der Windenergieanlage und/oder des Windparks für den Netzbetreiber freigegeben.

Der Netzbetreiber ist nun berechtigt, entsprechende Betriebsmodi, wie bspw. einen Netzwiederaufbau auszuwählen.

Anschließend werden die Windenergieanlagen des Windparks in einem nächsten Schritt 5400 in Abhängigkeit des durch den Netzbetreiber ausgewählten Betriebsmodus gesteuert.

Es wird also insbesondere vorgeschlagen, dass sofern es zu einer kritischen Netzsituation, wie zum Beispiel den Netzwiederaufbau, kommt, der Netzbetreiber auf die Windparks bzw. Windenergieanlagen zugreifen kann, insbesondere sofort. Der Netzbetreiber kann dann sämtlich Beschränkungen innerhalb des Windparks bzw. der Windenergieanlagen deaktivieren und die Windparks bzw. Windenergieanlagen mit ihrer maximalen Leistungsfähigkeit an Netzstützungsmaßnahmen beteiligen.

Hierfür wird insbesondere auch vorgeschlagen, dass der Netzbetreiber weitere Schnittstellen und/oder andere externe Sollwerte, wie bspw. vom Anlagenbetreiber, deaktivieren kann.

## Patentansprüche

1. Steuerung (1400) einer Windenergieanlage (100) und/oder eines Windparks (1000), wobei
- die Steuerung (1400) eine Vielzahl von Betriebsmodi (B1, B2, B3) umfasst und
- eine Schnittstelle (1410) aufweist, insbesondere zur Bereitstellung einer maximalen Stellfähigkeit der Windenergieanlage und/oder des Windparks in kritischen Netzsituationen, wobei
- die Schnittstelle (1410) dazu eingerichtet ist, ein Signal (S_{go}) eines Netzbetreibers (3000) zu empfangen, **dadurch gekennzeichnet, dass**
- sämtliche der Vielzahl von Betriebsmodi (B1, B2, B3) für den Netzbetreiber (3000) zur dessen Verfügung freigegeben werden.

2. Steuerung nach Anspruch 1, wobei
- die oder eine weitere Schnittstelle (1420) der Steuerung dazu eingerichtet ist, ein Signal eines Dritten zu empfangen und außerdem oder alternativ
- dass der Netzbetreiber innerhalb der Steuerung die höchste Priorität zugewiesen bekommt, wenn ein Signal vom Netzbetreiber über die Schnittstelle empfangen wurde.

3. Steuerung nach Anspruch 1 oder 2, ferner umfassend eine weitere Schnittstelle, bspw. für einen Windenergieanlagenbetreiber,
- die deaktiviert wird, wenn ein Signal vom Netzbetreiber über die Schnittstelle empfangen wurde.

4. Steuerung nach einem der vorstehenden Ansprüche, wobei
- die oder eine weitere Schnittstelle der Steuerung dazu eingerichtet ist, wenigstens an einer der nachfolgenden Steuer- und/oder Regelmethode teilzunehmen:
- Blindleistungsregelung;
- Spannungsregelung;
- Wirkleistungsregelung;
- Direktstromvermarktung;
- Minutenreserve;
- Sekundärreserve;
- Temperaturreglung;
- Cos-Phi-Regelung;
- Q(U)-Regelung;
- Schattenwurfsteuerung;
- Fledermaussteuerung.

5. Steuerung nach einem der vorstehenden Ansprüche, wobei
- die Steuerung eine Datenbank aufweist, mittels derer ein Zugriff des Netzbetreibers auf die Windenenergieanlage und/oder den Windpark protokolliert wird.//

6. Steuerung nach einem der vorstehenden Ansprüche, wobei
- die Steuerung wenigstens einen sicheren Betriebsmodus aufweist, der deaktiviert ist und der mittels der Schnittstelle, insbesondere nur, bevorzugt durch den Netzbetreiber, aktivierbar ist.

7. Steuerung nach Anspruch 6, wobei
- der sichere Betriebsmodus wenigstens eine Funktion der nachfolgenden Liste umfasst:
- Inertia-Emulation;
- Primärregelleistung;
- Q(U)-Regelung mit maximalen Stellbereich;
- Störfallregelung.

8. Steuerung nach einem der vorstehenden Ansprüche, wobei
- die Steuerung wenigstens einen weiteren Betriebsmodus aufweist, der aktiviert ist und der mittels der Schnittstelle, insbesondere nur, bevorzugt durch den Netzbetreiber, deaktivierbar ist.

9. Steuerung nach Anspruch 8, wobei
- der weitere Betriebsmodus wenigstens eine Funktion der nachfolgenden Liste umfasst:
- Schallreduktionsbetriebsmodus;
- Nachtbetriebsmodus.

10. Steuerung nach einem der vorstehenden Ansprüche, wobei
- die Vielzahl von Betriebsmodi wenigstens einen Modus der nachfolgenden Liste umfasst:
- einen Netzwiederaufbau-Modus; der insbesondere aktivierbar ist und bevorzugt aktiviert wird, wenn ein Signal des Netzbetreibers über die Schnittstelle empfangen wurde;
- einen STATCOM-Modus, der insbesondere aktivierbar ist und bevorzugt aktiviert wird, wenn ein Signal des Netzbetreibers über die Schnittstelle empfangen wurde;
- einen Schallreduktions-Modus, der insbesondere deaktivierbar ist und bevorzugt deaktiviert wird, wenn ein Signal des Netzbetreibers über die Schnittstelle empfangen wurde;
- einen Fledermauserkennungs-Modus, der insbesondere deaktivierbar ist und bevorzugt deaktiviert wird, wenn ein Signal des Netzbetreibers über die Schnittstelle empfangen wurde.

11. Verfahren zum Steuern einer Windenergieanlage und/oder eines Windparks, umfassend die Schritte:
- Empfangen eines Signals durch eine Steuerung der Windenergieanlage und/oder des Windparks,
- Feststellen ob das Signal, ein Signal eines Netzbetreibers ist, welches sämtliche einer Vielzahl von Betriebsmodi der Windenergieanlage und/oder des Windparks für den Netzbetreiber zur dessen Verfügung freigibt,
- Freigeben der Vielzahl von Betriebsmodi der Windenergieanlage und/oder des Windparks, wenn das Signal ein Signal eines Netzbetreibers ist, welches sämtliche der Vielzahl von Betriebsmodi der Windenergieanlage und/oder des Windparks für den Netzbetreiber zur dessen Verfügung freigibt,

12. Verfahren zum Steuern einer Windenergieanlage und/oder eines Windparks nach Anspruch 11, ferner umfassend den Schritt:
- Protokollieren der Freigabe der Betriebsmodi für den Netzbetreiber.

13. Verfahren zum Steuern einer Windenergieanlage und/oder eines Windparks nach einem der Ansprüche 11 oder 12, wobei
- das Feststellen ob das Signal ein Signal eines Netzbetreibers ist, welches sämtliche einer Vielzahl von Betriebsmodi der Windenergieanlage und/oder des Windparks für den Netzbetreiber zur dessen Verfügung freigibt, durch ein Vergleichen mit in einer Datenbank hinterlegten Signalen erfolgt.

14. Verfahren zum Steuern einer Windenergieanlage und/oder eines Windparks nach einem der Ansprüche 11 bis 13, ferner umfassend den Schritt:
- Steuern der Windenergieanlage und/oder des Windparks durch den Netzbetreiber.

15. Verfahren zum Steuern einer Windenergieanlage und/oder eines Windparks nach einem der Ansprüche 11 bis 14, ausgeführt durch eine Steuerung nach einem der Ansprüche 1 bis 10.

16. Windenergieanlage umfassend eine Steuerung nach einem der Ansprüche 1 bis 10 und/oder eine Steuerung, die dazu eingerichtet ist, ein Verfahren nach einem der Ansprüche 11 bis 15 auszuführen und/oder an einem solchen Verfahren teilzunehmen.

17. Windpark umfassend eine Windenergieanlage nach Anspruch 16 und außerdem oder alternativ eine Steuerung nach einem der Ansprüche 1 bis 10 und/oder eine Steuerung, die dazu eingerichtet ist, ein Verfahren nach einem der Ansprüche 11 bis 15 auszuführen und/oder an einem solchen Verfahren teilzunehmen.

## Claims

1. A control system (1400) of a wind power installation (100) and/or of a wind farm (1000), wherein
- the control system (1400) comprises a multiplicity of operating modes (B1, B2, B3) and
- has an interface (1410), in particular for providing maximum adjustability of the wind power installation and/or of the wind farm in critical power grid situations, wherein
- the interface (140) is configured to receive a signal (S_{go}) of a power grid operator (3000), **characterized in that**
- all of the multiplicity of operating modes (B1, B2, B3) are released and made available to the power grid operator (3000).

2. The control system as claimed in claim 1, wherein
- the one or more interfaces (1420) of the control system are configured to receive a signal of a third party and also or alternatively
- wherein the power grid operator is assigned the highest priority within the control system if a signal has been received from the power grid operator via the interface.

3. The control system as claimed in claim 1 or 2, also comprising a further interface, for example for a wind power installation operator,
- which is deactivated if a signal has been received from the power grid operator via the interface.

4. The control system as claimed in one of the preceding claims, wherein
- the one or more interfaces of the control system are configured to participate in at least one of the following open-loop and/or closed-loop control methods:
- reactive power control;
- voltage control;
- active power control;
- direct current marketing;
- minute reserve;
- secondary reserve;
- temperature control;
- Cos-phi control;
- Q(U) control;
- shadowing control;
- bat control.

5. The control system as claimed in one of the preceding claims, wherein
- the control system has a database by means of which access of the power grid operator to the wind power installation and/or the wind farm is logged.

6. The control system as claimed in one of the preceding claims, wherein
- the control system has at least one safe operating mode which is deactivated and which can be activated by means of the interface, preferably, in particular only, by the power grid operator.

7. The control system as claimed in claim 6, wherein
- the safe operating mode comprises at least one function from the following list:
- inertia emulation
- primary control power;
- Q(U) control with maximum adjustment range;
- breakdown control.

8. The control system as claimed in one of the preceding claims, wherein
- the control system has at least one further operating mode which is activated and which can be deactivated by means of the interface, preferably, in particular only, by the power grid operator.

9. The control system as claimed in claim 8, wherein
- the further operating mode comprises at least one function from the following list:
- noise-reduction operating mode;
- night operation mode.

10. The control system as claimed in one of the preceding claims, wherein
- the multiplicity of operating modes comprises at least one mode from the following list:
- a power grid recovery mode; which can be activated in particular, and is preferably activated, if a signal of the power grid operator has been received via the interface;
- a STATCOM mode which can be activated in particular, and is preferably activated, if a signal of the power grid operator has been received via the interface;
- a noise-reduction mode which can be deactivated in particular, and is preferably deactivated, if a signal of the power grid operator has been received via the interface;
- a bat-detection mode which can be deactivated in particular, and is preferably deactivated, if a signal of the power grid operator has been received via the interface.

11. A method for controlling a wind power installation and/or a wind farm, comprising the steps:
- receiving a signal by means of a control system of the wind power installation and/or of the wind farm,
- determining whether the signal is a signal of a power grid operator which releases and makes available all of a multiplicity of operating modes of the wind power installation and/or of the windfarm to the power grid operator,
- releasing the multiplicity of operating modes of the wind power installation and/or of the windfarm if the signal is a signal of a power grid operator which releases and makes available all of the multiplicity of operating modes of the wind power installation and/or of the windfarm to the power grid operator.

12. The method for controlling a wind power installation and/or a wind farm as claimed in claim 11, also comprising the step:
- logging the release of the operating modes for the power grid operator.

13. The method for controlling a wind power installation and/or a wind farm as claimed in one of claims 11 and 12, wherein
- the determination as to whether the signal is a signal of a power grid operator which releases and makes available all of a multiplicity of operating modes of the wind power installation and/or of the wind farm to the power grid operator is carried out by comparison with signals which are stored in a database.

14. The method for controlling a wind power installation and/or a wind farm as claimed in one of claims 11 to 13, also comprising the step:
- control of the wind power installation and/or of the wind farm by the power grid operator.

15. The method for controlling a wind power installation and/or a wind farm as claimed in one of claims 11 to 14, carried out by a control system as claimed in one of claims 1 to 10.

16. A wind power installation comprising a control system as claimed in one of claims 1 to 10 and/or a control system which is configured to carry out a method as claimed in one of claims 11 to 15 and/or to participate in such a method.

17. A wind farm comprising a wind power installation as claimed in claim 16 and also or alternatively a control system as claimed in one of claims 1 to 10 and/or a control system which is configured to carry out a method as claimed in one of claims 11 to 15 and/or participate in such a method.

## Revendications

1. Commande (1400) d'une éolienne (100) et/ou d'un parc éolien (1000), dans laquelle
- la commande (1400) comprend une pluralité de modes de fonctionnement (B1, B2, B3) et
- présente une interface (1410), en particulier pour la fourniture d'une capacité de réglage maximale de l'éolienne et/ou du parc éolien dans des situations de réseau critiques, dans laquelle
- l'interface (1410) est conçue afin de recevoir un signal (S_{go}) d'un exploitant de réseau (3000), **caractérisée en ce que**
- l'ensemble de la pluralité de modes de fonctionnement (B1, B2, B3) est libéré pour la disposition de l'exploitant de réseau (3000).

2. Commande selon la revendication 1, dans laquelle
- la ou une autre interface (1420) de la commande est conçue afin de recevoir un signal d'un tiers et en outre ou en variante
- qu'à l'exploitant de réseau soit attribuée la plus haute priorité au sein de la commande lorsqu'un signal de l'exploitant de réseau a été reçu par le biais de l'interface.

3. Commande selon la revendication 1 ou 2, comprenant de plus une autre interface, par exemple pour un exploitant d'éolienne,
- qui est désactivée lorsqu'un signal de l'exploitant de réseau a été reçu par le biais de l'interface.

4. Commande selon l'une quelconque des revendications précédentes, dans laquelle
- la ou une autre interface de la commande est conçue afin de participer au moins à une de la méthode de commande et/ou de régulation suivante :
-- régulation de la puissance réactive ;
-- régulation de la tension ;
-- régulation de la puissance active ;
-- commercialisation de courant continu ;
-- réserve de minutes ;
-- réserve secondaire ;
-- régulation de la température ;
-- régulation du Cos-Phi ;
-- régulation du Q(U) ;
-- commande d'ombre portée ;
-- commande relative aux chauves-souris.

5. Commande selon l'une quelconque des revendications précédentes, dans laquelle
- la commande présente une base de données, au moyen de laquelle un accès de l'exploitant de réseau à l'éolienne et/ou au parc éolien est consigné.

6. Commande selon l'une quelconque des revendications précédentes, dans laquelle
- la commande présente au moins un mode de fonctionnement sûr qui est désactivé et qui peut être activé au moyen de l'interface, en particulier seulement, de préférence par l'exploitant de réseau.

7. Commande selon la revendication 6, dans laquelle
- le mode de fonctionnement sûr comprend au moins une fonction de la liste suivante :
- émulation d'inertie ;
- puissance de régulation primaire ;
- régulation du Q(U) avec plage de réglage maximale ;
- régulation de cas de panne.

8. Commande selon l'une quelconque des revendications précédentes, dans laquelle
- la commande présente au moins un autre mode de fonctionnement qui est activé et qui peut être désactivé au moyen de l'interface, en particulier seulement, de préférence par l'exploitant de réseau.

9. Commande selon la revendication 8, dans laquelle
- l'autre mode de fonctionnement comprend au moins une fonction de la liste suivante :
-- mode de fonctionnement de réduction du bruit ;
-- mode de fonctionnement de nuit.

10. Commande selon l'une quelconque des revendications précédentes, dans laquelle
- la pluralité de modes de fonctionnement comprend au moins un mode de la liste suivante :
-- un mode de reconstitution de réseau, qui peut être activé en particulier et est de préférence activé lorsqu'un signal de l'exploitant de réseau a été reçu par le biais de l'interface ;
-- un mode STATCOM qui peut être activé en particulier et est de préférence activé lorsqu'un signal de l'exploitant de réseau a été reçu par le biais de l'interface ;
-- un mode de réduction du bruit qui peut être désactivé en particulier et est de préférence désactivé lorsqu'un signal de l'exploitant de réseau a été reçu par le biais de l'interface ;
-- un mode de reconnaissance de chauves-souris qui peut être désactivé en particulier et est de préférence désactivé lorsqu'un signal de l'exploitant de réseau a été reçu par le biais de l'interface.

11. Procédé de commande d'une éolienne et/ou d'un parc éolien, comprenant les étapes suivantes :
- la réception d'un signal par une commande de l'éolienne et/ou du parc éolien,
- la constatation si le signal est un signal d'un exploitant de réseau qui libère l'ensemble d'une pluralité de modes de fonctionnement de l'éolienne et/ou du parc éolien pour la disposition de l'exploitant de réseau,
- la libération de la pluralité de modes de fonctionnement de l'éolienne et/ou du parc éolien lorsque le signal est un signal d'un exploitant de réseau qui libère l'ensemble de la pluralité de modes de fonctionnement de l'éolienne et/ou du parc éolien pour la disposition de l'exploitant de réseau.

12. Procédé de commande d'une éolienne et/ou d'un parc éolien selon la revendication 11, comprenant de plus l'étape suivante :
- la consignation de la libération des modes de fonctionnement pour l'exploitant de réseau.

13. Procédé de commande d'une éolienne et/ou d'un parc éolien selon l'une quelconque des revendications 11 ou 12, dans lequel
- la constatation si le signal est un signal d'un exploitant de réseau qui libère l'ensemble d'une pluralité de modes de fonctionnement de l'éolienne et/ou du parc éolien pour la disposition de l'exploitant de réseau, est effectuée par une comparaison avec des signaux enregistrés dans une base de données.

14. Procédé de commande d'une éolienne et/ou d'un parc éolien selon l'une quelconque des revendications 11 à 13, comprenant de plus l'étape suivante :
- la commande de l'éolienne et/ou du parc éolien par l'exploitant de réseau.

15. Procédé de commande d'une éolienne et/ou d'un parc éolien selon l'une quelconque des revendications 11 à 14, réalisé par une commande selon l'une quelconque des revendications 1 à 10.

16. Eolienne comprenant une commande selon l'une quelconque des revendications 1 à 10 et/ou une commande qui est conçue afin de réaliser un procédé selon l'une quelconque des revendications 11 à 15 et/ou de participer à un tel procédé.

17. Parc éolien comprenant une éolienne selon la revendication 16 et en outre ou en variante une commande selon l'une quelconque des revendications 1 à 10 et/ou une commande qui est conçue afin de réaliser un procédé selon l'une quelconque des revendications 11 à 15 et/ou de participer à un tel procédé.
